# EUROPÄISCHE PATENTSCHRIFT

(11) **EP 2 518 025 B1**
(45) Veröffentlichungstag und Bekanntmachung des Hinweises auf die Patenterteilung: **22.09.2021**
(21) Anmeldenummer: 12165330.7
(22) Anmeldetag: 24.04.2012
(51) Int. Cl.: C02F 3/32, C02F 3/04

(54) **System zur Verstoffwechslung von organischen Stoffen und Verfahren zur Verstoffwechslung von organischen Stoffen**
System for metabolization of organic materials and method for metabolizing organic materials
Système de métabolisme de matières organiques et procédé de métabolisme de matières organiques

(30) Priorität: 29.04.2011 DE 102011100143
(43) Veröffentlichungstag der Anmeldung: 31.10.2012
(73) Patentinhaber: Deutsches Zentrum für Luft- und Raumfahrt e.V., 51147 Köln (DE)
(72) Erfinder: Hauslage, Jens, 53121 Bonn (DE); Waßer, Kai, 53501 Grafschaft (DE)
(74) Vertreter: dompatent von Kreisler Selting Werner - Partnerschaft von Patent- und Rechtsanwälten mbB

(56) Entgegenhaltungen:
- WO-A1-96/25366
- WO-A1-2010/108226
- FR-A1- 2 833 254
- Jay & Liz McClellan: "Aquaponics", , 2007, Retrieved from the Internet: URL:http://www.brainright.com/Projects/Aqu aponics/ [retrieved on 2010-03-24]
- Michael Tezel: "Aquaponics Common Sense Guide", , 1 July 2009 (2009-07-01), XP055405190, Retrieved from the Internet: URL:http://backyardaquaponics.com/Travis/A quaponics_Common_Sense_Guide.pdf [retrieved on 2017-09-08]

## Beschreibung

Die vorliegende Erfindung betrifft ein System und ein Verfahren zur Verstoffwechslung von organischen Stoffen.

Organische Stoffe liegen häufig in Form von Abfällen, wie Küchenabfällen oder auch Urin vor, die meist dem normalen Müll oder Abwasserkreislauf zugegeben und ungenutzt entsorgt werden.

Häufig werden dabei die organischen Abfälle dem Restmüll zugegeben, wobei der dadurch erzeugte nasse Müll ein Problem für die Entsorgungsunternehmen darstellt, da bei der Müllverbrennung hochwertiger Verbundmüll zugeführt werden muss, um den Verbrennungsvorgang aufrecht zu erhalten.

In ländlichen Gebieten erfolgt eine Verwertung von Küchenabfällen häufig im Rahmen einer Verkompostung. In Großstädten ist eine derartige Möglichkeit jedoch nicht gegeben oder aufgrund von Geruchsbelästigungen nicht gewünscht. Bei der Erschaffung von bioregenerativen Lebenserhaltungssystemen ist es ebenfalls ein Ziel, organische Abfallstoffe sinnvoll zu verwerten.

Aus WO 2010/108226 A1 und WO 96/25366 A1 sind Systeme zur Abwasserbehandlung bzw. Abwasserreinigung bekannt, die die Merkmale des Oberbegriffs von Anspruch 1 offenbaren. Ein weiteres System ist aus https:// brainright.com/2020/10/10/aquaponics/bekannt.

Es ist daher die Aufgabe der vorliegenden Erfindung, ein Verfahren und ein System zu schaffen, mit dem eine Verwertung von organischen Abfällen in Großstädten oder in bioregenerativen Lebenserhaltungssystemen möglich ist.

Zur Lösung der Aufgabe dienen die Merkmale des Anspruchs 1 bzw. 7.

Erfindungsgemäß ist ein System zur Verstoffwechslung von organischen Stoffen mit mindestens einem Gehäuse in einem langgestreckten Raum vorgesehen, wobei das Gehäuse an einem oberen Endbereich mindestens eine Einlassöffnung zum Einlass von Flüssigkeiten mit organischen Stoffen und an einem unteren Endbereich mindestens eine Auslassöffnung für Flüssigkeiten aufweist, wobei die Einlassöffnung und die Auslassöffnung mit dem langgestreckten Raum in Verbindung stehen und wobei sich der langgestreckte Raum von dem oberen Endbereich zu dem unteren Endbereich des Gehäuses erstreckt. Zwischen der mindestens einen Einlassöffnung und der mindestens einen Auslassöffnung ist an dem Gehäuse mindestens eine Pflanzöffnung zur Aufnahme eines Trägerkörpers für Pflanzen angeordnet, wobei die Pflanzöffnung mit dem langgestreckten Raum verbunden ist. In dem langgestreckten Raum ist ein poröses Füllmaterial angeordnet. Das poröse Füllmaterial ist mineralisch.

Mit dem erfindungsgemäßen System ist eine sinnvolle Verwertung von organischen Abfallstoffen in besonders vorteilhafter Weise möglich, indem die organischen Abfallstoffe mit der Flüssigkeit in den langgestreckten Raum des Gehäuses des erfindungsgemäßen Systems eingeleitet werden. In dem langgestreckten Raum ist ein poröses Füllmaterial angeordnet, das aufgrund seiner Porosität eine große Oberfläche besitzt. An dieser Oberfläche siedeln sich Mikroorganismen an, die die Umwandlung der organischen Stoffe vornehmen. Aufgrund der großen Oberfläche kann Sauerstoff, z.B. aus der Luft, in ausreichendem Umfang an die Mikroorganismen gelangen, so dass ein im Wesentlichen aerober Abbau der organischen Stoffe erfolgt. Bei der Umwandlung der organischen Stoffe entstehen somit keine wahrnehmbaren unangenehmen Gerüche. In den Poren des Füllmaterials können Mikroklimazonen entstehen, indem ein anaerober Abbau von den Stoffen erfolgt, die über einen aeroben Abbau nicht abbaubar sind. Da dieser anaerobe Abbau in Mikroklimazonen erfolgt, entstehen nur geringe Mengen von als unangenehmen Geruch empfundenen Gasen, die insgesamt für die Umgebung nicht wahrnehmbar sind und zusätzlich durch die Flüssigkeit gebunden werden können.

Bei dem Abbau bzw. der Umwandlung der organischen Stoffe entstehen über die Nitrifikation von Mikroorganismen Nitrate, die von Pflanzen, die in den Pflanzöffnungen an dem Gehäuse, beispielsweise über Trägerkörper aufgenommen werden, als Nahrungsquelle dienen können. Die Nitrate werden beispielsweise über die Flüssigkeit zu den Pflanzen transportiert.

Das erfindungsgemäße System ermöglicht somit eine Verwertung von organischen Stoffen, wie beispielsweise Abfallstoffen, indem über das erfindungsgemäße System die organischen Stoffe in Nitrate, die als Pflanzennahrung dienen, umgewandelt werden. Durch die Umwandlung der organischen Stoffe ohne die Entstehung von wahrnehmbaren unangenehmen Gerüchen ist das erfindungsgemäße System in vorteilhafter Weise auch in Großstädten, beispielsweise in Wohnräumen, einsetzbar.

Durch das Vorsehen von mineralischem porösen Füllmaterial kann eine Pufferung und Regulierung des pH-Wertes in dem System erfolgen.

Dadurch, dass das Gehäuse einen langgestreckten Raum aufweist, wobei die Flüssigkeit mit organischen Stoffen im oberen Endbereich des Gehäuses eingeleitet wird und im unteren Endbereich des Gehäuses ausgelassen wird, fließt die Flüssigkeit mit organischen Stoffen über eine lange Wegstrecke durch das poröse Füllmaterial, so dass ein Abbau von organischen Stoffen in effektiver Weise erfolgen kann. Der langgestreckte Raum muss sich dabei nicht notwendigerweise vertikal erstrecken oder als gerader langgestreckter Raum ausgebildet sein. Selbstverständlich ist es auch möglich, dass der langgestreckte Raum in anderen Formen ausgestaltet ist, sofern ein Durchfluss der Flüssigkeit mit organischen Stoffen durch das in dem langgestreckten Raum angeordnete poröse Füllmaterial Weise gewährleistet ist.

Die Erfindung sieht ferner vor, dass das Gehäuse mit dem unteren Endbereich in einem Flüssigkeitsbecken angeordnet ist, wobei die Auslassöffnung in das Flüssigkeitsbecken mündet. Dabei steht die mindestens eine Einlassöffnung mit dem Flüssigkeitsbecken in Verbindung, wobei in dem Flüssigkeitsbecken die Flüssigkeit mit organischen Stoffen anordbar ist.

Durch das Anordnen des Gehäuses mit dem unteren Endbereich in einem Flüssigkeitsbecken wird die durch die Auslassöffnung aus dem Gehäuse austretende Flüssigkeit in vorteilhafter Weise aufgefangen.

Wenn in dem Flüssigkeitsbecken die Flüssigkeit mit organischen Stoffen angeordnet wird, wobei die Einlassöffnung mit dem Flüssigkeitsbecken in Verbindung steht, wird ein Kreislauf geschaffen, indem die Flüssigkeit aus dem Flüssigkeitsbecken in die Einlassöffnung eingefüllt wird, wobei nach dem Durchfließen des Gehäuses die Flüssigkeit wieder zurück in das Flüssigkeitsbecken fließt. Zum Erzeugen der Flüssigkeit mit organischen Stoffen werden in dem Flüssigkeitsbecken organische Stoffe oder eine Flüssigkeit mit organischen Stoffen zugeführt.

Die organischen Stoffe können als Feststoffe, Suspension oder als Flüssigkeit zugeführt werden.

Das Flüssigkeitsbecken kann somit als Aufbewahrungsbehälter für Flüssigkeit mit organischen Stoffen und somit als Puffer für das System dienen. Darüber hinaus können in dem Flüssigkeitsbecken aquatische Lebewesen, wie beispielsweise Wirbeltiere, wirbellose Tiere und/oder Pflanzen wie Algen, leben.

Vorzugsweise ist vorgesehen, dass das poröse Füllmaterial Vulkangestein und/oder ein Tonmineral ist, wobei das Füllmaterial vorzugsweise Schüttgut ist. Vulkangestein und/oder ein Tonmineral, wie beispielsweise mineralisiertes Katzenstreu, hat sich als besonders vorteilhaft in dem erfindungsgemäßen System herausgestellt. Vulkangestein und die meisten Tonminerale sind kostengünstig erhältlich und weisen darüber hinaus eine große Oberfläche auf, die das Ansiedeln der Mikroorganismen in besonders vorteilhafter Weise ermöglicht. Durch das Vorsehen von Füllmaterial in Form von Schüttgut ist darüber hinaus eine besonders große Oberfläche bereitstellbar, wobei darüber hinaus ein Austausch des Füllmaterials in dem erfindungsgemäßen System in vorteilhafter Weise gewährleistet ist.

Erfindungsgemäß ist ferner vorgesehen, dass das poröse Füllmaterial eine Porosität zwischen 35 % und 70 % besitzt. Unter Porosität wird das Verhältnis von Hohlraumvolumen zu Gesamtvolumen verstanden.

In der mindestens eine Pflanzöffnung ist ein Trägerkörper für Pflanzen aufgenommen.

Der Trägerkörper besteht erfindungsgemäß aus Mineralwolle oder Glaswolle oder aus einem Fasermaterial auf Polymerbasis. Derartige Trägerkörper haben sich als besonders vorteilhaft für Pflanzen herausgestellt, da die Wurzeln der Pflanzen derartige Trägerkörper in vorteilhafter Weise durchdringen und sich in den langgestreckten Raum erstrecken können, um das von den Mikroorganismen dort gebildete Nitrat aufzunehmen.

Der Trägerkörper für Pflanzen kann abiotisch sein.

Als Pflanzen können beispielsweise Obst- oder Gemüsepflanzen, wie beispielsweise Paprika, Tomaten oder Küchenkräuter verwendet werden. Auf diese Weise ist dem erfindungsgemäßen System sowohl die Bereitstellung von Obst und Gemüse als auch die Erzeugung von tierischen Proteinen in Form von Fischen möglich, was insbesondere bei der Verwendung des erfindungsgemäßen Systems in einem bioregenerativen Lebenserhaltungssystem von besonderem Vorteil ist.

Die in dem Flüssigkeitsbecken lebenden aquatischen Lebewesen können darüber hinaus den Abbau bzw. die Umwandlung der organischen Stoffe unterstützen, indem beispielsweise dem Flüssigkeitsbecken zugefügte organische Stoffe von den Fischen gefressen werden, wobei Exkremente der Fische über das System abgebaut werden. Ferner kann das erfindungsgemäße System auch zur Luftreinigung dienen, indem CO₂ an den Oberflächen des porösen Füllmaterials absorbiert wird und Kohlensäure entsteht. Diese Kohlensäure kann beispielsweise durch die in dem Flüssigkeitsbecken lebenden Algen abgebaut werden.

Das erfindungsgemäße System kann beispielsweise als offenes System ausgebildet sein, so dass durch die zuvor beschriebene Luftreinigung und die Anordnung von Pflanzen Sauerstoff für die Umgebung produziert wird.

In einem Ausführungsbeispiel der Erfindung ist vorgesehen, dass eine Flüssigkeitsleitung und eine Pumpe mindestens eine Einlassöffnung mit dem Flüssigkeitsbecken verbindet, wobei die Pumpe vorzugsweise als Tauchpumpe ausgebildet ist. Eine derartige erfindungsgemäße Konstruktion ermöglicht auf einfache Art und Weise die Zielführung der Flüssigkeit mit organischen Stoffen zu der Einlassöffnung. Da die organischen Stoffe dem Flüssigkeitsbecken zugeführt werden und dort über einen längeren Zeitraum verbleiben, entsteht aus den organischen Stoffen in Feststoffform zusammen mit der Flüssigkeit eine Suspension, die auf einfache Art und Weise über die Pumpe zu der Einlassöffnung gefördert werden kann.

In einem besonders bevorzugten Ausführungsbeispiel der Erfindung ist vorgesehen, dass im unteren Bereich des Gehäuses eine Gasleitung angeordnet ist, über die ein Luftstrom in den langgestreckten Raum einleitbar ist. Durch das zusätzliche Einleiten von Luft in den langgestreckten Raum ist die Umwandlung bzw. der Abbau der organischen Stoffe auf besonders effektive Weise möglich. Die Erfindung sieht ferner ein Verfahren zur Verstoffwechslung von organischen Stoffen vor, das insbesondere in Wohnräumen oder in biogenerativen Lebenserhaltungssystemen eingesetzt werden kann. Das Verfahren weist folgende Schritte auf:
- Erzeugen einer Flüssigkeit mit organischen Stoffen,
- Einleiten der Flüssigkeit mit organischen Stoffen in einen oberen Bereich eines langgestreckten Raums, der mit porösem Füllmaterial gefüllt ist,
- wobei die Flüssigkeit mit organischen Stoffen nach dem Einleiten durch das poröse Füllmaterial fließt und wobei Mikroorganismen die organischen Stoffe zumindest teilweise in Nitrate umwandeln,
- Aufnahme der Nitrate von in Trägerkörpern angeordneten Pflanzen, wobei die Trägerkörper mit dem langgestreckten Raum in Verbindung stehen.

Das erfindungsgemäße Verfahren wird mit dem zuvor beschriebenen erfindungsgemäßen System durchgeführt. Das erfindungsgemäße Verfahren weist die gleichen zuvor im Zusammenhang mit dem erfindungsgemäßen System beschriebenen Vorteile auf.

Das erfindungsgemäße Verfahren sieht vor, dass die Flüssigkeit nach dem Durchfließen des porösen Füllmaterials der Flüssigkeit mit organischen Stoffen wieder zugeführt wird. Es wird somit ein Flüssigkeitskreislauf erzeugt.

Die Flüssigkeit mit organischen Stoffen kann Wasser mit hinzugefügten organischen Stoffen sein. Durch das Vorsehen von Wasser als Flüssigkeit werden die in den Trägerkörpern angeordneten Pflanzen mit dem für das Wachstum notwendigen Wasser versorgt. Gleichzeitig wird über die Flüssigkeit in Form von Wasser den Pflanzen die bei der Umwandlung der organischen Stoffe entstehenden Nitrate den Pflanzen mit dem Wasser zugeführt.

Die Flüssigkeit mit organischen Stoffen wird in einem Flüssigkeitsbecken erzeugt, wobei organisches Material als Feststoff oder Flüssigkeit zugeführt wird. Dabei können in dem Flüssigkeitsbecken aquatische Lebewesen, vorzugsweise Pflanzen und/oder Fische, leben. Für das Vorsehen von aquatischen Lebewesen in dem Flüssigkeitsbecken ist es von besonderem Vorteil, wenn die Flüssigkeit Wasser ist.

Es kann vorgesehen sein, dass das Flüssigkeitsbecken mit Rotlicht bestrahlt wird. Auf diese Weise wird ein Algenwachstum in dem Flüssigkeitsbecken verbessert bzw. beschleunigt.

In dem porösen Füllmaterial kann ein Luftstrom erzeugt werden, der entgegen der Fließrichtung der Flüssigkeit mit organischen Stoffen strömt.

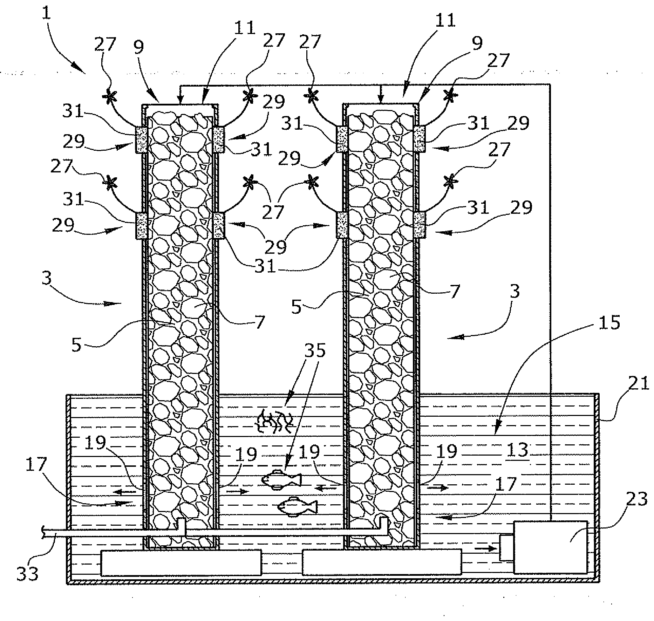

Im Folgenden wird unter Bezugnahme auf die einzige Figur das erfindungsgemäße System bzw. Verfahren näher erläutert.

Die einzige Figur zeigt eine schematische Ansicht eines erfindungsgemäßen Systems 1 zur Verstoffwechslung von organischen Stoffen.

Das in der einzigen Figur gezeigte System 1 weist zwei Gehäuse 3 auf, die als Hohlsäulen ausgebildet sind. Die Gehäuse 3 weisen in ihrem Inneren einen langgestreckten Raum 5 auf. In dem langgestreckten Raum 5 ist ein poröses Füllmaterial 7 angeordnet. Das poröse Füllmaterial 7 kann beispielsweise ein als Schüttgut vorliegendes Vulkangestein sein. In dem oberen Endbereich 9 weist jedes Gehäuse eine Einlassöffnung zum Einlass von Flüssigkeiten 13 mit organischen Stoffen 15 auf. An einem unteren Endbereich 17 weist jedes Gehäuse 3 zwei Auslassöffnungen 19 auf, aus denen Flüssigkeiten austreten können. Die Einlassöffnung 11 und die Auslassöffnungen 19 stehen somit jeweils mit dem langgestreckten Raum 5 des Gehäuses 3 in Verbindung.

Im Rahmen der Erfindung bedeutet "in Verbindung stehen", dass eine Flüssigkeitsverbindung oder räumliche Verbindung vorliegt.

Die Gehäuse 3 sind vertikal angeordnet und stehen mit ihrem unteren Endbereich in einem Flüssigkeitsbecken 21, in dem die Flüssigkeit 13 mit organischen Stoffen 15 aufgenommen ist. Dabei münden die Auslassöffnungen 19 der Gehäuse 3 in das Flüssigkeitsbecken 21.

In dem Flüssigkeitsbecken 21 wird die Flüssigkeit 13 mit organischen Stoffen 15 erzeugt, indem organische Stoffe 15 der Flüssigkeit 13 von außen zugeführt wird, wie in der Figur durch einen Pfeil dargestellt ist. Die organischen Stoffe können beispielsweise in flüssiger oder fester Form vorliegen und beispielsweise Küchenabfälle oder Urin sein. In dem Flüssigkeitsbehälter 21 entsteht eine Flüssigkeit 13 mit organischen Stoffen, wobei die organischen Stoffe in der Flüssigkeit suspensiert sein können. Über eine Pumpe 23, die beispielsweise als Tauchpumpe ausgebildet sein kann sowie eine Flüssigkeitsleitung 25, wird die Flüssigkeit 13 mit organischen Stoffen 15 zu der Einlassöffnung 11 gepumpt und somit dem langgestreckten Raum 5 des Gehäuses 3 zugeführt. Die Flüssigkeit 13 mit organischen Stoffen fließt durch das poröse Füllmaterial 7. Aufgrund der Porosität besitzt das Füllmaterial 17 eine große Oberfläche, an der sich Mikroorganismen ansiedeln können. Die Mikroorganismen bauen die organischen Stoffe ab bzw. wandeln diese um. Dies erfolgt als aerober Prozess, so dass keine unangenehmen Gerüche entstehen. In den organischen Stoffen 15 enthaltene Stoffe, die nicht aerob abbaubar sind, können in Mikrozonen, die im Inneren der Poren des Füllmaterials 7 entstehen, anaerob abgebaut werden. In diesen anaeroben Mikrozonen entstehen nur geringe Mengen an Gasen, die unangenehme Gerüche erzeugen, so dass in der Umgebung des erfindungsgemäßen Systems 1 keine wahrnehmbaren unangenehmen Gerüche vorherrschen.

Bei dem Abbau bzw. der Umwandlung der organischen Stoffe entstehen Nitrate, die Pflanzen 27 als Nährstoffe dienen können. Das Gehäuse 3 des erfindungsgemäßen Systems 1 weist dazu zwischen der Einlassöffnung 11 und der Auslassöffnung 19 mehrere Pflanzöffnungen 29 auf, in denen Trägerkörper 31 für die Pflanzen 27 angeordnet sind. Die Pflanzöffnungen 29 stehen mit dem langgestreckten Raum 5 in Verbindung. Die Trägerkörper 31 können beispielsweise aus Mineralwolle oder Glaswolle bestehen und abiotisch sein. Derartige Trägerkörper 31 haben sich als besonders vorteilhaft erwiesen, da in diesen Trägerkörper 31 die Pflanzen 27 mit ihren Wurzeln einen guten Halt finden, wobei die Wurzeln durch die Trägerkörper hindurch in den langgestreckten Raum wachsen können. Die Flüssigkeit 13, die vorzugsweise Wasser ist, versorgt dabei die Pflanzen 27 sowohl mit der notwendigen Flüssigkeit als auch mit Nitraten, die zuvor durch die Mikroorganismen erzeugt und von der Flüssigkeit 13 zu den Pflanzen 27 getragen werden. Dabei ist das in der Figur gezeigte Kreislaufsystem von besonderem Vorteil, da über die Flüssigkeit 13 auch das in dem unteren Bereich des Gehäuses 3, beispielsweise in dem unteren Endbereich 17, durch die Mikroorganismen erzeugte Nitrat den weiter oben angeordneten Pflanzen 27 zugeführt werden kann, indem das Nitrat mit der Flüssigkeit 13 und dem organischen Material 15 über die Pumpe 23 und die Zuleitung 25 der Einlassöffnung 11 zugeführt wird.

Im unteren Endbereich 17 des Gehäuses 3 kann eine Gasleitung 33 angeordnet sein, die dem langgestreckten Raum 5 Luft zuführt, so dass ein Luftstrom in dem langgestreckten Raum 5 entsteht. Aufgrund der vertikalen Anordnung des Gehäuses 3 steigt der Luftstrom in dem langgestreckten Raum 5 auf und es entsteht ein Gegenstrom zu der durch die poröse Füllmaterial 7 fließende Flüssigkeit 13 mit organischen Stoffen 15. Auf diese Weise ist ein besonders effektiver Abbau der organischen Stoffe 15 möglich, wobei insbesondere durch die Einleitung von Luft der gewünschte aerobe Abbau verbessert wird.

In dem Flüssigkeitsbecken 21 können aquatische Lebewesen 35, wie beispielsweise Pflanzen, Algen und/oder Fische, leben. Diese können zu den Funktionen des erfindungsgemäßen Systems beitragen, indem beispielsweise die Fische einen Teil der organischen Stoffe 15 fressen und als Exkremente, die über das erfindungsgemäße System 1 abgebaut werden können, ausscheiden.

Das erfindungsgemäße System 1 ist als offenes System ausgebildet. Mit dem erfindungsgemäßen System kann auch die Luftqualität der Umgebung verbessert werden, indem die Pflanzen 27 Sauerstoff erzeugen. Gleichzeitig kann Kohlendioxid an den Oberflächen des porösen Füllmaterials 7 absorbiert werden und es entsteht Kohlensäure, die über die Algen abgebaut wird, so dass weiterer Sauerstoff entsteht.

Die Pflanzen 27 können Obst- oder Gemüsepflanzen, wie beispielsweise Paprika, Tomaten oder Küchenkräuter sein.

Die als aquatische Lebewesen 35 in dem Flüssigkeitsbecken 21 lebenden Fische können Speisefische sein. Auf diese Weise ist mit dem erfindungsgemäßen System die Gewinnung von Obst und Gemüse sowie tierischen Proteinen in Form von Fisch möglich, so dass die zugeführten organischen Stoffe sinnvoll verwertet werden.

Um beispielsweise das Wachstum der Algen in dem Flüssigkeitsbecken 21 zu unterstützen, kann das Flüssigkeitsbecken 21 mit Rotlicht beleuchtet werden.

Das Flüssigkeitsbecken 21 dient auch zur Pufferung des Systems, so dass ausreichend organische Stoffe 15 in dem System vorhanden sind.

Das erfindungsgemäße System 1 kann als relativ kompakte Einheit in Wohnräumen eingesetzt werden. Selbstverständlich ist es auch möglich, Großanlagen mit dem erfindungsgemäßen System zu erzeugen, die beispielsweise in bioregenerativen Lebenserhaltungssystemen eingesetzt werden.

Das erfindungsgemäße System 1 sowie das zuvor beschriebene erfindungsgemäße Verfahren kann durch die Verwertung von organischen Stoffen, beispielsweise Küchenabfällen, einen Betrag zur Verringerung der in Großstädten anfallenden Abfällen liefern. Gleichzeitig ist eine Verwertung derartiger organischer Stoffe möglich, so dass das erfindungsgemäße System 1 auch in vorteilhafter Weise in bioregenerativen Lebenserhaltungssystemen eingesetzt werden kann.

## Patentansprüche

1. System (1) zur Verstoffwechslung von organischen Stoffen (15) mit mindestens einem Gehäuse (3) mit einem langgestreckten Raum (5),
wobei das Gehäuse (13) an einem oberen Endbereich (9) mindestens eine Einlassöffnung (11) zum Einlass von Flüssigkeiten (13) mit organischen Stoffen (15) und an einem unteren Endbereich (17) mindestens eine Auslassöffnung (19) für Flüssigkeiten aufweist,
wobei die Einlassöffnung (11) und die Auslassöffnung (19) mit dem langgestreckten Raum (5) in Verbindung stehen, und
wobei sich der langgestreckte Raum (5) von dem oberen Endbereich (9) zu dem unterem Endbereich (17) des Gehäuses (3) erstreckt,
mit mindestens einer zwischen der Einlassöffnung (11) und der Auslassöffnung (19) an dem Gehäuse (3) angeordneten Pflanzöffnung (29) , wobei die Pflanzöffnung (29) mit dem langgestreckten Raum (5) verbunden ist, und mit einem Flüssigkeitsbecken (21), wobei die mindestens eine Einlassöffnung (11) mit dem Flüssigkeitsbecken (21) in Verbindung steht und wobei in dem Flüssigkeitsbecken (21) die Flüssigkeit (13) mit organischen Stoffen (15) anordenbar ist,
**dadurch gekennzeichnet, dass**
in der mindestens einen Pflanzöffnung ein Trägerkörper (31) für Pflanzen (27) aufgenommen ist, der aus Mineralwolle, Glaswolle oder aus einem Fasermaterial auf Polymerbasis besteht,
dass in dem langgestreckten Raum (5) poröses Füllmaterial (7) angeordnet ist, wobei das poröse Füllmaterial mineralisch ist und eine Porosität zwischen 35 % und 70 % besitzt, und
dass das Gehäuse (3) mit dem unteren Endbereich (17) in dem Flüssigkeitsbecken (21) angeordnet ist, wobei die Auslassöffnung (19) in das Flüssigkeitsbecken (21) mündet.

2. System nach Anspruch 1, **dadurch gekennzeichnet, dass** das poröse Füllmaterial (7) Vulkangestein und/oder ein Tonmineral ist, wobei das Füllmaterial (7) vorzugsweise Schüttgut ist.

3. System nach einem der Ansprüche 1 oder 2, **dadurch gekennzeichnet, dass** mehrere Pflanzöffnungen (29) vorgesehen sind und in jeder Pflanzöffnung (29) ein Trägerkörper (31) für Pflanzen (27) aufgenommen ist, wobei vorzugsweise der Trägerkörper (31) für Pflanzen abiotisch ist.

4. System nach einem der Ansprüche 1 bis 3, **dadurch gekennzeichnet, dass** eine Flüssigkeitsleitung (25) und eine Pumpe (23) die mindestens eine Einlassöffnung (11) und das Flüssigkeitsbecken (21) verbindet, wobei die Pumpe (23) vorzugsweise als Tauchpumpe ausgebildet ist.

5. System nach einem der Ansprüche 1 bis 4, **dadurch gekennzeichnet, dass** im unteren Endbereich (17) des Gehäuses (3) eine Luftleitung (33) angeordnet ist, über die ein Luftstrom in den langgestreckten Raum (5) einleitbar ist.

6. System nach einem der Ansprüche 1 bis 5, **dadurch gekennzeichnet, dass** das System (1) zur Verstoffwechslung von organischen Stoffen (15) als offenes System ausgebildet ist.

7. Verfahren zur Verstoffwechslung von organischen Stoffen (15), mit einem System nach einem der Ansprüche 1 bis 6, mit folgenden Schritten:
- Erzeugen einer Flüssigkeit (13) mit organischen Stoffen (15),
- Einleiten der Flüssigkeit (13) mit organischen Stoffen (15) in einen oberen Bereich des langgestreckten Raums (5), der mit porösen Füllmaterial (7) gefüllt ist,
- wobei die Flüssigkeit (13) mit organischen Stoffen (15) nach dem Einleiten durch das poröse Füllmaterial (7) fließt und wobei Mikroorganismen die organischen Stoffe (15) zumindest teilweise in Nitrate umwandeln,
- Aufnahme der Nitrate von in Trägerkörpern (31) angeordneten Pflanzen (27), wobei die Trägerkörper (31) mit dem langgestreckten Raum (5) in Verbindung stehen,
**dadurch gekennzeichnet, dass** die Flüssigkeit (13) mit organischen Stoffen (15) in dem Flüssigkeitsbecken (21) erzeugt wird, wobei organisches Material (15) als Feststoff oder Flüssigkeit zugefügt wird, wobei die Flüssigkeit nach dem Durchfließen des porösen Füllmaterials (7) der Flüssigkeit (13) mit organischen Stoffen (15) wieder zugeführt wird.

8. Verfahren nach Anspruch 7, **dadurch gekennzeichnet, dass** die Flüssigkeit (13) mit organischen Stoffen (15) Wasser mit zugefügten organischen Stoffen (15) ist.

9. Verfahren nach Anspruch 7 oder 8, **dadurch gekennzeichnet, dass** in dem Flüssigkeitsbecken (21) aquatische Lebewesen (35), vorzugsweise Algen und/oder Fische, leben, wobei vorzugsweise das Flüssigkeitsbecken (21) mit Rotlicht bestrahlt wird.

10. Verfahren nach einem der Ansprüche 7 bis 9, **dadurch gekennzeichnet, dass** in dem porösen Füllmaterial (7) ein Luftstrom erzeugt wird, der entgegen der Fließrichtung der Flüssigkeit (13) mit organischen Stoffen (15) strömt.

## Claims

1. A system (1) for the metabolization of organic substances (15), comprising at least one housing (3) with an elongated space (5),
wherein the housing (13) has at least one inlet opening (11) at the top end portion (9) for the introduction of liquids (13) with organic substances (15) therein and at least one outlet opening (19) for liquids at the bottom end portion (17),
wherein the inlet opening (11) and the outlet opening (19) are in communication with the elongated space (5), and
wherein the elongated space (5) extends from the top end portion (9) to the bottom end portion (17) of the housing (3),
with at least one planting opening (29) provided on the housing (3) between the inlet opening (11) and the outlet opening (19), the planting opening (29) being in communication with the elongated space (5), and with a liquid basin (21), the at least one inlet opening (11) being in communication with the liquid basin (21), and the liquid (13) with organic substances (15) therein being adapted to be arranged in the liquid basin (21),
**characterized in that**
a support element (31) for plants (27) is accommodated in the at least one planting opening, the support element preferably being made from rock wool, glass wool or a fiber material on polymer basis,
a porous filler material (7) is provided in the elongated space (5), the porous filler material being mineral and having a porosity between 35% and 70%, and
the housing (3) is arranged with the bottom end portion (17) in the liquid basin (21), the outlet opening (19) opening into the liquid basin (21).

2. The system according to claim 1, **characterized in that** the porous filler material (7) is volcanic stone and/or a clay mineral, the filler material (7) preferably being a bulk material.

3. The system according to any one of claims 1 or 2, **characterized in that** a plurality of planting openings (29) is provided and that one support element (31) for plants (27) is accommodated in each planting opening (29), the support element (31) for plants preferably being is abiotic.

4. The system according to any one of claims 1 to 3, **characterized in that** a liquid line (25) and a pump (23) connect the at least one inlet opening (11) and the liquid basin (21), the pump (23) preferably being designed as an immersion pump.

5. The system according to any one of claims 1 to 4, **characterized in that** an air line (33) is arranged in the bottom end portion (17) of the housing (3), via which an airflow can be introduced into the elongated space (5).

6. The system according to any one of claims 1 to 5, **characterized in that** the system (1) for the metabolization of organic substances (15) is designed as an open system.

7. A method for the metabolization of organic substances (15) with a system according to any on of claims 1 to 6, the method comprising the following steps:
- producing a liquid (13) with organic substances therein (15),
- introducing the liquid (13) with organic substances (15) therein into a top portion of the elongated space (5) filled with porous filler material (7),
- wherein the liquid (13) with organic substances (15) therein flows through the porous filler material (7) after it has been introduced, and wherein microorganisms transform the organic substances (15) at least partly into nitrates,
- absorption of the nitrates by plants (27) arranged in support elements (31), the support elements (31) being in communication with the elongated space (5),
**characterized in that** the liquid (13) with organic substances (15) therein is produced in the liquid basin (21), with organic material (15) being supplied in solid or liquid form, wherein, after having flown through the porous filler material (7), the liquid is returned to the liquid (13) with organic substances (15) therein.

8. The method according to claim 7, **characterized in that** the liquid (13) with organic substances (15) therein is water with organic substances (15) supplied thereto.

9. The method according to claim 7 or 8, **characterized in that** aquatic life (35), preferably algae and/or fish, exists in the liquid basin (21), the liquid basin (21) preferably being irradiated with infrared light.

10. The method according to any one of claims 7 to 9, **characterized in that** an airflow is created in the porous filler material (7) that flows in the direction opposite to the flow direction of the liquid (13) with organic substances (15) therein.

## Revendications

1. Système (1) pour la métabolisation de matières organiques (15) doté
d'au moins un boîtier (3) avec un espace allongé (5), dans lequel le boîtier (13) comporte à une zone d'extrémité supérieure (9) au moins une ouverture d'admission (11) destinée à l'admission de liquides (13) avec des matières organiques (15) et comporte à une zone d'extrémité inférieure (17) au moins une ouverture de sortie (19) pour les liquides,
dans lequel l'ouverture d'admission (11) et l'ouverture de sortie (19) sont en liaison avec l'espace allongé (5), et
dans lequel l'espace allongé (5) s'étend de la zone d'extrémité supérieure (9) à la zone d'extrémité inférieure (17) du boîtier (3),
doté d'au moins une ouverture pour plante (29) disposée sur le boîtier (3) entre l'ouverture d'admission (11) et l'ouverture de sortie (19), dans lequel l'ouverture pour plante (29) est reliée à l'espace allongé (5), et doté d'un bassin à liquide (21), dans lequel l'au moins une ouverture d'admission (11) est en liaison avec le bassin à liquide (21) et dans lequel le liquide (13) avec des matières organiques (15) peut être disposé dans le bassin à liquide (21),
**caractérisé en ce que**
dans l'au moins une ouverture pour plante (29) est logé un corps porteur (31) pour plantes (27), lequel est constitué de laine minérale, de laine de verre ou d'une autre matière fibreuse à base de polymères,
**en ce que** du matériau de remplissage poreux (7) est disposé dans l'espace allongé (5), dans lequel le matériau de remplissage poreux est minéral et possède une porosité entre 35 % et 70 %, et
**en ce que** le boîtier (3) est disposé avec la zone d'extrémité inférieure (17) dans le bassin à liquide (21), dans lequel l'ouverture de sortie (19) débouche dans le bassin à liquide (21).

2. Système selon la revendication 1, **caractérisé en ce que** le matériau de remplissage poreux (7) est de la roche volcanique et/ou un minéral argileux, dans lequel le matériau de remplissage poreux (7) est de préférence un solide en vrac.

3. Système selon l'une des revendications 1 ou 2, **caractérisé en ce que** plusieurs ouvertures pour plante (29) sont prévues et un corps porteur (31) pour plantes (27) est logé dans chaque ouverture pour plante (29), dans lequel le corps porteur (31) pour plantes est de préférence abiotique.

4. Système selon l'une des revendications 1 à 3, **caractérisé en ce qu'**une conduite de liquide (25) et une pompe (23) relient l'au moins une ouverture d'admission (11) et le bassin à liquide (21), dans lequel la pompe (23) est de préférence réalisée comme pompe immergée.

5. Système selon l'une des revendications 1 à 4, **caractérisé en ce qu'**une conduite d'air (33) est disposée dans la zone d'extrémité inférieure (17) du boîtier (3), par le biais de laquelle un flux d'air peut être introduit dans l'espace allongé (5).

6. Système selon l'une des revendications 1 à 5, **caractérisé en ce que** le système (1) destiné à la métabolisation des matières organiques (15) est réalisé comme système ouvert.

7. Procédé de métabolisation de matières organiques (15) avec un système selon l'une des revendications 1 à 6, avec les étapes suivantes :
- production d'un liquide (13) avec des matières organiques (15),
- introduction du liquide (13) avec des matières organiques (15) dans la zone supérieure de l'espace allongé (5), laquelle est remplie de matériau de remplissage poreux (7),
- dans lequel le liquide (13) avec des matières organiques (15) s'écoule après l'introduction à travers le matériau de remplissage poreux (7) et dans lequel des microorganismes transforment les matières organiques (15) au moins partiellement en nitrates,
- absorption des nitrates par des plantes (27) disposées dans les corps porteurs (31), dans lequel les corps porteurs (31) sont en liaison avec l'espace allongé (5),
**caractérisé en ce que** le liquide (13) avec des matières organiques (15) est produit dans le bassin à liquide (21), dans lequel les matières organiques (15) sont ajoutées comme solides ou comme liquides, dans lequel le liquide (13) est de nouveau alimenté en matières organiques (15) après avoir traversé le matériau de remplissage poreux (7).

8. Procédé selon la revendication 7, **caractérisé en ce que** le liquide (13) avec des matières organiques (15) est de l'eau avec des matières organiques (15) ajoutées.

9. Procédé selon la revendication 7 ou 8, **caractérisé en ce que** des organismes aquatiques (35), de préférence des algues et/ou des poissons, vivent dans le bassin à liquide (21), dans lequel le bassin à liquide (21) est de préférence irradié avec de la lumière rouge.

10. Procédé selon l'une des revendications 7 à 9, **caractérisé en ce qu'**un flux d'air est produit dans le matériau de remplissage poreux (7), lequel s'écoule à contre-courant par rapport au liquide (13) avec des matières organiques (15).
